# EUROPEAN PATENT SPECIFICATION

(11) **EP 1 473 789 B1**
(45) Date of publication and mention of the grant of the patent: **17.08.2011**
(21) Application number: 03015904.0
(22) Date of filing: 11.07.2003
(51) Int. Cl.: H01M 8/04

(54) **Device and method for controlling fuel cell system**
Vorrichtung und Verfahren zur Steuerung einer Brennstoffzellenanlage
Dispositif et méthode de contrôle d'un système de pile à combustible

(30) Priority: 28.04.2003 CN 03109391
(43) Date of publication of application: 03.11.2004
(73) Proprietor: Asia Pacific Fuel Cell Technologies, Ltd., Neihu, Taipei 114 (TW)
(72) Inventor: Yang, Jefferson YS, c/o Asia Pacific Fuel Cell, Neihu, Taipei 114 (TW); Yang, Te-Chou, c/o Asia Pacific Fuel Cell, Neihu, Taipei 114 (TW); Hsu, Yao-Sheng, c/o Asia Pacific Fuel Cell, Neihu, Taipei 114 (TW)
(74) Representative: Goddar, Heinz J.

(56) References cited:
- WO-A-02/37588
- US-A- 5 047 298
- US-A1- 2002 022 161
- US-A1- 2003 022 037

## Description

### BACKGROUND OF THE INVENTION

### 1. Field of the Invention

The present invention relates generally to the field of fuel cells, and in particular to a device for controlling a fuel cell system and a method for performing the control operation for the fuel cell system.

### 2. Description of the Prior Art

Fuel cells are an electro-chemical device that make use of electro-chemical reaction between a fuel, such as hydrogen, and an oxidizer, such as oxygen contained in the surrounding air, to generate electrical power. The fuel cells are advantageous in low contamination, high efficiency and high power density. Thus, developments and researches are intensively devoted to the fuel cell field for exploitation of the utilization thereof. A variety of fuel cells are available, among which proton exchange membrane fuel cell, abbreviated as PEMFC, is the most prospective one due to the advantages of low operation temperature, fast activation and high power density with respect to unit weight and volume.

A typical fuel cell stack is comprised of a number of membrane electrode assemblies (MEA). Each MEA comprises an anode catalyst layer, a polymeric proton exchange membrane and a cathode catalyst layer. A basic cell can be formed by coupling the MEA with two gas diffusers and a bipolar plate in an overlapping and stacked manner.

The operation of the fuel cells is dependent upon the proton exchange membrane that functions to convey protons between the cathode and the anode of the fuel cell for the progress of the electro-chemical reaction. The performance of the fuel cells is heavily dependent upon the reaction conditions, such as operation temperature, hydrogen flow rate and air flow rate. On the other hand, the operation safety of the fuel cells is dependent upon output voltage and current of the fuel cells. Besides the above factors that affect the overall performance/effectiveness of the fuel cells, in order to realize the optimum performance and safe operation of the fuel cells, additional effective control measures are required.

US publication no. 2003/0022037 discloses a fuel cell system method, apparatus and scheduling. A controller in a fuel cell system performs various operating parameter checks at a predefined schedule, including one or more of a stack current check; a stack voltage check; a cell voltage check; a purge cell check; an oxygen concentration check; a hydrogen concentration check; a stack temperature check; an ambient air temperature check; a fuel pressure check; and an airflow rate check; a hydrogen sensor heater check; a battery voltage check; a microcontroller self-check; and/or toggling a watchdog. The frequency of the checks are set relative to achieve an efficient control of the fuel cell system by selectively distributing the load on the microcontroller.

US 5,047,298 discloses a closed loop reactant/product management system for electrochemical galvanic energy devices. The system comprises a central microprocessor linked monitor and control system which includes the first and second gas pressure sensors connected to the inlet to the first and second internal gas flow passages, respectively, the first and second gas flow sensors located in fluid flow connection intermediate the first and second gas repressurization means and the first and second reservoir means, respectively, and liquid flow sensor means located in fluid flow connection intermediate the inlet to the liquid flow passage and the first reservoir. A central microprocessor links the sensors and is designed to receive data from the sensors' and to compare such date with pre-programmed values, and to transmit signals in response to such comparisons.

US 2002/0022161 teaches a fuel cell system comprising a fuel cell, which generates power by supplying anode gas and cathode gas into the fuel cell, a compressor which controls the amount of the gas to be supplied into the fuel cell, and a pressure control valve which controls the gas pressure of the fuel cell and which is provided on the downstream of the fuel cell. The system is controlled by changing an amount of the supply gas by said compressor, and thereafter changing the opening of said pressure control valve during the transition period of the fuel cell.

### SUMMARY OF THE INVENTION

Thus, a primary object of the present invention is to provide a control device for operating fuel cell systems in optimum conditions.

Another object of the present invention is to provide a control method for controlling the operation of the fuel cell to realize the optimum performance of the fuel cell system.

A further object of the present invention is to provide a control device for controlling and providing safe operation of the fuel cell system by detecting operation conditions of the fuel cells and, in response thereto, initializing a control process in accordance with the detection result.

To achieve the above objects, in accordance with the present invention, there is provided a device for controlling a fuel cell system. The device comprises a microprocessor, a voltage detection circuit, a current detection circuit, a hydrogen pressure detection circuit, a temperature detection circuit, an air flow rate control circuit that is controlled in a pulse width modulation manner, and a pulse signal generation circuit. The air flow rate control circuit is controlled by the microprocessor for regulating the air flow rate through an air supply conduit in a pulse width modulation manner in accordance with output current of a fuel cell stack. The pulse signal generation circuit is controlled by the microprocessor to generate pulse signals for controlling hydrogen flow through a hydrogen supply conduit. The device for controlling a fuel cell system comprises further a storage unit coupled to the microprocessor for storage of reference values of operation parameters of the fuel cell system; and a setting unit coupled to the microprocessor for selectively establishing a control process and the reference parameters, wherein the pressure gauging means of the hydrogen pressure detection circuit comprise: a first pressure gauge (P1) mounted to a high pressure side of the hydrogen supply conduit for detection of upstream pressure of hydrogen that is discharged from a fuel supply device; and a second pressure gauge (P2) mounted to a low pressure side of the hydrogen supply conduit for detection of downstream side pressure of hydrogen that is guided to the fuel cell stack. The device monitors the operation conditions of the fuel cell system and performs a preset control method to control the operation of the fuel cell stack as detailed in claim 4 so as to optimize the efficiency and overall performance of the fuel cell system.

### BRIEF DESCRIPTION OF THE DRAWINGS

The present invention will be apparent to those skilled in the art by reading the following description of a preferred embodiment thereof, with reference to the attached drawings, in which:

Figure 1 is a system block diagram of a fuel cell system in accordance with the present invention; and

Figure 2 is a block diagram of a control device of the fuel cell system of the present invention.

### DETAILED DESCRIPTION OF PREFERRED EMBODIMENT

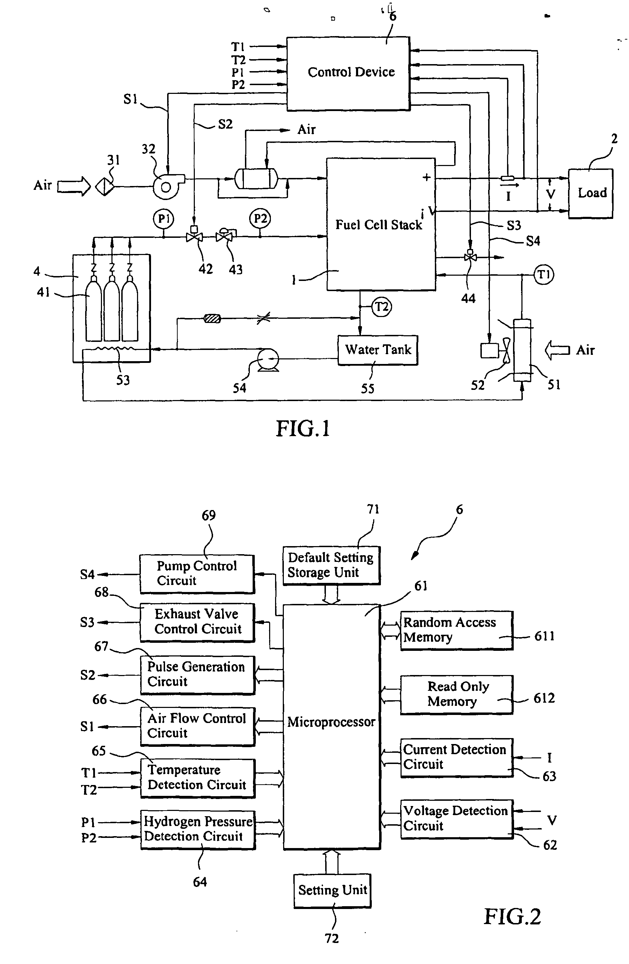

With reference to the drawings and in particular to **Figure 1**, a fuel cell system in accordance with the present invention comprises a fuel cell stack 1 that is comprised of a number of membrane electrode assemblies (MEAs), each comprising an anode electrode layer, a proton exchange membrane and a cathode electrode layer, which together forms a basic cell unit of electro-chemical reaction. The MEAs are combined with a hydrogen diffuser, an air diffuser and a bipolar plate in a cascade manner to form the fuel cell. A conductor plate and an end plate are then secured to opposite ends of a number of MEAs to form the fuel cell stack. The MEAs of a fuel cell stack are electrically connected in either serial manner or parallel manner to provide an output of predetermined voltage and current. The fuel cell stack has a positive terminal (marked "+" in the drawing) and a negative terminal (marked "-" in the drawing) for supply of a direct current as output to a load **2**.

For the electro-chemical reaction carried out inside the fuel cells stack **1**, air is drawn into the fuel cell stack **1** by a air pumping device **32**, such as a blower, through an air filter **31**, both being connected to the fuel cell stack **1** by an air supply conduit. Hydrogen, on the other hand, is supplied by a fuel supply device **4** to the fuel cell stack **1**. The fuel supply device **4** is comprised of a number of alloy-based hydrogen storage canisters **41**, each containing hydrogen therein for serving as fuel for the fuel cell stack **1**. The hydrogen supplied from the fuel supply device **4** is conducted along a hydrogen supply conduit (not labeled) through a hydrogen valve **42** and a pressure regulator **43** to the fuel cell stack **1**. The hydrogen valve **42** and the pressure regulator **43** function to control the flow rate and pressure of the hydrogen supplied to the fuel cells stack **1**. A hydrogen exhaust valve **44** is mounted to the fuel cell stack **1** for relief of additional and residual hydrogen, as well as other undesired gases and liquids, from the fuel cell stack **1**.

A temperature regulation device comprises a heat radiator **51**, a fan **52**, a heat exchanger **53**, a pump **54** and a water tank **55** for controlling and maintaining a constant temperature for the operation of the fuel cell stack **1**. The water tank **55** reserves an amount of water serving as cooling agent. The pump **54** conveys the water from the water tank **55** through the heat exchanger **53** that is contained in the fuel supply device **4** toward the heat radiator **51**. The fan **52** causes air flows through the radiator **51** for dissipation of heat from the water flowing through the radiator **51** into the surrounding air and thus cooling the water. The cooled water is conducted through the fuel cell stack **1** by a water supply conduit whereby temperature inside the fuel cell stack **1** can be controlled and maintained at a desired level or operation temperature. The water tank **5** also functions to collect water generated by the electro-chemical reaction induced in the fuel cells stack **1** as byproducts.

In accordance with the present invention, a control device **6** is incorporated in the fuel cell system for controlling the operation of the fuel cell system. Also referring to **Figure 2**, the control device **6** comprises a microprocessor **61** to which a random access memory (RAM) **611** and a read only memory (ROM) **612** are incorporated. The control device **6** comprises a voltage detection circuit **62** and a current detection circuit **63** connected to the positive and negative terminals of the fuel cell stack **1.**

The voltage detection circuit **62** detects an output voltage of the fuel cell stack **1** across the positive ("+") and negative ("-") terminals of the fuel cells stack **1**. The output voltage of the fuel cell stack **1** is analog and is indicated by reference numeral "**V**" in the drawings. The voltage detection circuit **62** comprises an analog-to-digital converter that converts the analog output voltage **V** into a digital signal that is then applied to the microprocessor **61**.

The current detection circuit **63** detects an output direct current of the fuel cell stack **1** across the positive ("+") and negative ("-") terminals. The output current of the fuel cell stack **1**, which is indicated by reference numeral "I" in the drawings, is processed by an analog-to-digital converter, which converts the analog output current **I** into a digital signal that is then applied to the microprocessor **61**.

A hydrogen pressure detection circuit **64** comprises a high pressure side (upstream side) pressure gauge **P1** and a low pressure side (downstream side) pressure gauge **P2** mounted to the hydrogen supply conduit connecting the fuel supply device **4** and the fuel cell stack **1**, respective upstream and downstream of the hydrogen valve **42** and the pressure regulator **43**. The pressure gauges **P1** and **P2** detect the hydrogen pressure inside the hydrogen supply conduit on the upstream and downstream sides and provide signals corresponding to the upstream hydrogen pressure (pressure of the hydrogen discharged from the fuel supply device **4**) and the downstream hydrogen pressure (pressure of the hydrogen supplied to the fuel cell stack **1** that is regulated by the pressure regulator **43**) to an analog-to-digital converter incorporated in the hydrogen pressure detection circuit **64**, which generates and applies digital signals representing the upstream and downstream hydrogen pressures to the microprocessor **61**.

A temperature detection circuit **65** comprises a first temperature gauge **T1** and a second temperature gauge **T2** mounted to the water supply conduit that conducts the cooling water through the fuel cell stack **1**, respective upstream and downstream of the fuel cell stack **1**. The temperature gauges **T1** and **T2** detect the temperature of the cooling water flowing through the water supply conduit upstream and downstream of the fuel cell stack **1** and provide signals corresponding to the upstream water temperature and the downstream water temperature, which broadly speaking are related to the temperature inside the fuel cell stack **1**, to an analog-to-digital converter incorporated in the temperature detection circuit **65**, which generates and applies digital signals representing the upstream and downstream water temperatures to the microprocessor **61.**

An air flow control circuit **66** comprises a pulse width modulation (PWM) circuit controlled by the microprocessor **61** to generate a PWM control signal **S1** for controlling the air flow rate caused by the air pumping device **32** to supply to the fuel cell stack **1**.

A pulse generation circuit **67** is controlled by the microprocessor **61** to generate pulse signal **S2** that controls opening/closing operation of the hydrogen valve **42**. By means of the control of the hydrogen valve **42** by the pulse signal **S2** generated by the pulse generation circuit **67**, the flow of hydrogen from the fuel supply device **4** to the fuel cell stack **1** can be well controlled. For example, the hydrogen valve **42** can be operated in a normally open manner and is shut down by the pulse signal **S2** every **30** seconds until the hydrogen pressure inside the hydrogen supply conduit drops below a predetermined level. Thereafter, the hydrogen valve **42** is opened again to resume supply of hydrogen to the fuel cell stack **1**.

The control device **6** further comprises an exhaust valve control circuit **68** and a pump control circuit **69** coupled to the microprocessor **61**. Under the control of the microprocessor **61**, the exhaust valve control circuit **68** generates an exhaust valve control signal **S3**, which controls opening/closing of the exhaust valve **44**. The pump control circuit **69**, under the control of the microprocessor **61**, generates a pump control signal **S4** for controlling the operation of the pump **54**.

In addition, the control device **6** comprises a default setting storage unit **71** coupled to the microprocessor **61** for storage of default setting values or reference values of operation parameters, such as rated voltage, rated current, maximum current, hydrogen pressure, and operation temperature. A setting unit **72** is coupled to the microprocessor **61** for establishing a control process and setting the operation parameters by for example an operator. Thus, the operator may enter desired settings for the operation parameters, as well as establishing any desired control process based on requirements for each particular case. The fuel cell stack 1 may then be operated in accordance with the established control process, based on the operation parameters set in the storage unit **71** under the control of the control device **6**.

Based on the hardware architecture described above, the present invention also offers a method for controlling the operation of the fuel cell stack **1**, comprising the following steps. At first, the control method starts with a start-up routing for activation of the fuel cell system by opening the hydrogen valve **42** whereby hydrogen is supplied from the fuel supply device 4 to the fuel cell stack **1**. The air pumping device **32** is then turned on to draw in the surrounding air, which contains oxygen, and supply the air to the fuel cell stack **1** at a maximum air flow rate for a predetermined period of time. The supply of the air at the maximum air flow rate helps removing any water residual inside the fuel cell stack **1**, such as water that remains in separator plates of the fuel cell stack during the previous operation. Thereafter, the air flow rate is reduced to a minimum level and at the same time, the hydrogen exhaust valve **44** is opened for a given period of time, such as **3** seconds, to expel impure gases out of the fuel cell stack 1 and the associated piping thereof.

Next, a temperature regulation routing is initiated by turning on the fan **52** and the pump **54** to control and maintain the fuel cell stack **1** at a desired operation temperature.

An operation control routing is then started wherein the control device **6** detects the hydrogen pressures **P1, P2** at both the high and low pressure sides of the hydrogen supply conduit. In case the low pressure side hydrogen pressure **P2** is below a predetermined level, such as **4** Psi, the hydrogen valve **42** is opened for a period of time, such as **5** seconds. The hydrogen pressures **P1**, **P2** are constantly monitored and each time the low pressure side hydrogen pressure **P2** drops below the predetermined level, the hydrogen valve **42** is opened for the given period of time. The time period when the hydrogen valve **42** is opened and the predetermined level of the low pressure side hydrogen pressure **P2** are stored in the storage unit **71** and can be changed by means of the setting unit **72**.

The control device **6** detects the output current **I** of the fuel cell stack **1**. Based on the output current **I**, the air flow rate caused by the air pumping device **32** is changed. In an embodiment of the present invention, the air pumping device **32** is driven by an electrical motor that is controlled by the control device **6** in a pulse width modulation manner. The air pumping device **32** is controlled to provide a minimum flow rate of **50** slm. An example of the control of the air flow rate of the air pumping device **32** is as follows:

(**1**) When the output current **I** is smaller than a preset lower limit, **I**min, such as **20** Amps, the air flow rate of the air pumping device **32** is set at the minimum value.

(**2**) When the output current **I** is greater than the lower limit Imin, but smaller than a preset upper limit, Imax, the flow rate is set to be three times of the required flow rate in accordance with the output current **I** in order to supply sufficient oxygen to the fuel cell stack **1**.

(**3**) When the output current **I** is greater than the upper limit Imax, the flow rate of the air pumping device **32** is set to the maximum flow rate that can be taken by the air pumping device **32**.

The output voltage of the fuel cell stack **1** may get lowered when liquid accumulation occurs inside the fuel cell stack **1**. In this case, the air pumping device **32** supplies air at the maximum air flow rate to remove the accumulated liquid. For example, if the rated output voltage of the fuel cell stack **1** is 48 volts and if a lower bound of the output voltage is set to be 36-42 volts, when the detected value of the output voltage, such as 42 volts, is lower than the rated value, the air pumping device **32** is controlled to supply air at the maximum air flow rate for a given period of time, such as **3** seconds, and then resumes the normal flow rate. At the same time, the hydrogen exhaust valve **44** is opened for a given period of time, such as **0.5** seconds, in order to expel the liquid accumulated in the fuel cell stack **1**. In case the output voltage of the fuel cell stack **1** gets down into the threshold of the lower bound, such as 36 volts, for the sake of safety of operation, the fuel cell system is completely shut down.

Theoretical normal operation temperature of the fuel cell stack **1** is between 45-60°C. When the operation temperature of the fuel cell stack **1** is within the normal operation temperature range, the operation of the fuel cell is kept. When the temperature gets higher than the normal operation temperature, the fan **52** is actuated and air flow is caused through the radiator **51** to lower down the temperature of the cooling water that flows through the fuel cell stack **1** in order to have the temperature of the fuel cell stack **1** get lower than for example 45°C. When the temperature continuously rises and gets higher than an upper bound of temperature set for safe operation, such as 85°C, the fuel cell system is completely shut down for safety purposes.

To this point, it is apparent to those skilled in the art that the control device **6** of the present invention, when incorporated with a fuel cell system, effectively maintains the optimum operation of the fuel cell system by monitoring the operation conditions thereof. Efficiency and operation safety of the fuel cell system is thus enhanced.

Although the present invention has been described with reference to the preferred embodiment thereof and the best mode for controlling the operation of the fuel cells, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A device (6) for controlling a fuel cell system comprising a fuel cell stack (1) to which hydrogen and air containing oxygen are supplied through hydrogen supply conduit and air supply conduit, the device comprising:
a microprocessor (61);
a voltage detection circuit (62) for detection of an output voltage of the fuel cell stack (1);
a current detection circuit (63) for detection of an output current of the fuel cell stack (1);
a hydrogen pressure detection circuit (64) comprising pressure gauging means (P1, P2) for detection of hydrogen pressure inside the hydrogen supply conduit;
a temperature detection circuit (65) comprising temperature gauging means (T1, T2) for detection of temperature associated with the fuel cell stack (1);
an air flow control circuit (66) controlled by the microprocessor (61) comprising a pulse width modulation circuit for generation of a pulse width modulation signal (S1) for controlling an air pumping device (32);
a pulse generation circuit (67) controlled by the microprocessor (61) for generating and applying a pulse signal (S2) to a hydrogen valve (42) mounted to the hydrogen supply conduit;
a storage unit (71) coupled to the microprocessor (61) for storage of reference values of operation parameters of the fuel cell system; and
a setting unit (72) coupled to the microprocessor (61) for selectively establishing a control process and the reference parameters
wherein the pressure gauging means of the hydrogen pressure detection circuit (64) comprising:
a first pressure gauge (P1) mounted to a high pressure side of the hydrogen supply conduit for detection of upstream pressure of hydrogen that is discharged from a fuel supply device (4); and
a second pressure gauge (P2) mounted to a low pressure side of the hydrogen supply conduit for detection of downstream side pressure of hydrogen that is guided to the fuel cell stack (1).

2. The device (6) as claimed in Claim 1, wherein the output voltage of the fuel cell stack (1) is in analog form and wherein the voltage detection circuit (62) comprises an analog-to-digital converter for converting the analog signal into the first detection signal (S5) in digital form that is applied to the microprocessor (61).

3. The device (6) as claimed in Claim 1, wherein the output current of the fuel cell stack (1) is in analog form and wherein the current detection circuit (63) comprises an analog-to-digital converter for converting the analog signal into the second detection signal (S6) in digital form that is applied to the microprocessor (61).

4. A method for controlling a fuel cell system including:
- a fuel cell stack (1),
- an air pumping device (32) and a hydrogen supply device (4), both coupled to the fuel cell stack (1) to supply the air and hydrogen thereto, respectively, the hydrogen being supplied to the fuel cell stack (1) through a hydrogen supply conduit having a high pressure side coupled to the hydrogen supply device (4) and a low pressure side coupled to the fuel cell stack (1), and
- a hydrogen exhaust valve (44) coupled to the fuel cell stack (1) for relief of the hydrogen therefrom;
the method comprising the steps of:
(1)opening the hydrogen valve (42) to supply hydrogen from the fuel supply device (4) to the fuel cell stack (1);
(2) turning on the air pumping device (32) to supply air to the fuel cell stack (1) at a maximum flow rate for a predetermined period of time, thereby removing residual water inside the fuel cell stack (1);
(3) reducing the air flow to a minimum air flow rate and at the same time opening the hydrogen exhaust valve (44) for a given period of time to expel impure gases out of the fuel cell stack (1);
(4) detecting and monitoring the hydrogen pressures (P1, P2) at both the high and low pressure sides of the hydrogen supply conduit, wherein the hydrogen valve (42) is opened for a given period of time each time the low pressure side hydrogen pressure (P2) drops below a predetermined level;
(5) detecting the output current (I) of the fuel cell stack (1), wherein the air flow rate of the air pumping device (32) is set
- to a minimum value when the output current (I) is smaller than a preset lower limit (Imin),
- to be three times of the required flow rate in accordance with the output current (I) in order to supply sufficient oxygen to the fuel cell stack (1) when the output current (I) is greater than the preset lower limit (Imin) and smaller than a preset upper limit (Imax),
and
- to the maximum flow rate that can be taken by the air pumping device (32) when the output current (1) is greater than the upper limit (Imax).

5. The method as claimed in Claim 4, further comprising a step of:
controlling temperature of the fuel cell stack (1) within a preset range.

6. The method as claimed in Claim 4, wherein the selective opening/closing of the hydrogen valve (42) is performed using a pulse signal.

7. The method as claimed in Claim 4, further comprising the step of:
shutting down the fuel cell system when the output voltage of the fuel cell stack (1) is below a preset safety threshold level of the output voltage.

8. The method as claimed in Claim 4, further comprising the step of:
controlling the air pumping device (32) in accordance with the output voltage of the fuel stack (1) whereby when the output voltage is lower than a preset value, the air pumping device (32) is caused to provide air flow with a maximum air flow rate for a given period of time and then resumes a regular flow rate, at the same time, the hydrogen exhaust valve (44) is opened for a given period of time and then closed.

## Patentansprüche

1. Vorrichtung (6) zum Steuern eines Brennstoffzellsystems mit einem Brennstoffzellenstapel (1) an den Wasserstoff und Sauerstoff enthaltende Luft durch eine Wasserstoffversorgungsleitung beziehungsweise eine Luftversorgungsleitung bereitgestellt werden mit:
- einem Mikroprozessor (61);
- einem Spannungserfassungsschaltkreis (62) zum Erfassen einer Ausgangsspannung des Brennstoffzellenstapels (1);
- einem Stromerfassungsschaltkreis (63) zum Erfassen eines Ausgangsstroms des Brennstoffzellenstapels (1);
- einem Wasserstoffdruckerfassungsschaltkreis (64) mit Druckmessmitteln (P1, P2) zum Erfassen des Wasserstoffdrucks innerhalb der Wasserstoffversorgungsleitung;
- einem Temperaturerfassungsschaltkreis (64) mit Temperaturmessmitteln (T1, T2) zum Erfassen der mit dem Brennstoffzellenstapel (1) assoziierten Temperatur;
- einem Luftflusssteuerungsschaltkreis (66), der vom Mikroprozessor (61) gesteuert ist, mit einem Pulsweitenmodulationsschaltkreis zum Erzeugen eines Pulsweitenmodulationssignals (S1) zum Steuern einer Luftpumpeinrichtung (32);
- einem Pulserzeugungsschaltkreis (67), der vom Mikroprozessor (61) gesteuert ist, zum Erzeugen und Anwenden eines Pulssignals (S2) auf ein Wasserstoffventil (42), das an der Wasserstoffversorgungsleitung angeschlossen ist;
- einer Speichereinheit (71), die an den Mikroprozessor (61) angeschlossen ist, zum Speichern von Referenzwerten der Betriebsparameter des Brennstoffzellsystems; und
- einer Stelleinheit (72), die an den Mikroprozessor (61) angeschlossen ist, zum selektiven Etablieren eines Steuervorgangs und der Referenzparameter,
wobei die Druckmessmittel des Wasserstoffdruckerfassungsschaltkreises (64) aufweisen:
ein erstes Druckmessgerät (P1), das auf einer Hochdruckseite der Wasserstoffversorgungsleitung zur Erfassung eines stromaufwärts befindlichen Drucks des Wasserstoffs, der von einer Brennstoffversorgungseinrichtung entlassen wird, befestigt ist,
ein zweites Druckmessgerät (P2), das an einer Niedrigdruckseite der Wasserstoffversorgungsleitung zur Erfassung des stromabwärts befindlichen Drucks des Wasserstoffs, der zum Brennstoffzellenstapel (1) geführt wird, befestigt ist.

2. Vorrichtung (6) nach Anspruch 1, wobei die Ausgangsspannung des Brennstoffzellenstapels (1) in analoger Form ist und wobei der Spannungserfassungsschaltkreis (62) einen Analog-Digital-Wandler zum Konvertieren des analogen Signals in eine erstes Erfassungssignal (S5) in digitaler Form aufweist, das auf den Mikroprozessor (61) angewendet wird.

3. Vorrichtung (6) nach Anspruch 1, wobei der Ausgangsstrom des Brennstoffzellenstapels (1) in analoger Form ist und wobei der Stromerfassungsschaltkreis (63) einen Analog-Digital-Wandler zum Konvertieren des analogen Signals in ein zweites Erfassungssignal (S6) in digitaler Form aufweist, das auf den Mikroprozessor (61) angewendet wird.

4. Verfahren zum Steuern eines Brennstoffzellsystems mit:
- einem Brennstoffzellenstapel (1),
- einer Luftpumpeinrichtung (32) und einer Wasserstoffversorgungseinrichtung (4), beide an den Brennstoffzellenstapel (1) angeschlossen, um Luft beziehungsweise Wasserstoff an diesen bereitzustellen, wobei der Wasserstoff dem Brennstoffzellenstapel (1) durch eine Wasserstoffversorgungsleitung bereitgestellt wird, die eine an die Wasserstoffversorgungseinrichtung (4) angeschlossene Hochdruckseite und eine an den Brennstoffzellenstapel (1) angeschlossene Niedrigdruckseite hat, und
- einem Wasserstoffabfuhrventil (44), das an den Brennstoffzellenstapel (1) zum Entlassen von Wasserstoff aus diesem angeschlossen ist,
wobei das Verfahren die Schritte aufweist:
(1) Öffnen des Wasserstoffventils (42), um Wasserstoff von der Brennstoffversorgungseinrichtung (4) an den Brennstoffzellenstapel (1) bereitzustellen;
(2) Einschalten der Luftpumpeinrichtung (32), um dem Brennstoffzellenstapel (1) bei maximaler Flussrate für eine vorbestimmte Zeitdauer Luft bereitzustellen, wodurch Restwasser innerhalb des Brennstoffzellenstapels (1) beseitigt wird;
(3) Reduzieren des Luftflusses auf eine minimale Luftflussrate und gleichzeitig Öffnen des Wasserstoffabfuhrventils (44) für eine bestimmte Zeitdauer zum Austreiben unreiner Gase aus dem Brennstoffzellenstapel (1);
(4) Erfassen und Überwachen der Wasserstoffdrücke (P1, P2) an sowohl der Hochdruck- als auch der Niedrigdruckseite der Wasserstoffversorgungsleitung, wobei das Wasserstoffventil (42) jedes Mal, wenn der Wasserstoffdruck auf der Niedrigdruckseite (P2) für eine bestimmte Zeitdauer unterhalb eines vorbestimmten Schwellenwerts sinkt, geöffnet wird;
(5) Erfassen des Ausgangsstroms (I) des Brennstoffzellenstapels (1), wobei die Luftflussrate der Luftpumpeinrichtung (32),
- wenn der Ausgangsstrom (I) kleiner als ein vorgegebener unterer Grenzwert (Imin) ist, auf einen Minimalwert,
- wenn der Ausgangsstrom (I) größer als der vorgegebene untere Grenzwert (Imin) und kleiner als ein vorgegebener oberer Grenzwert (Imax) ist, um ausreichend Sauerstoff zum Brennstoffzellenstapel (1) zuzuführen auf das dreifache der in Zusammenhang mit dem Ausgangsstrom (I) erforderlichen Flussrate, und
- wenn der Ausgangsstrom (I) größer als der obere Grenzwert (Imax) ist, auf die maximale Flussrate, die von der Luftpumpeinrichtung (32) erreicht werden kann,
gesetzt wird.

5. Verfahren nach Anspruch 4, weiter den Schritt aufweisend: Steuern der Temperatur des Brennstoffzellenstapels (1) innerhalb eines vorbestimmten Bereichs.

6. Verfahren nach Anspruch 4, wobei das selektive Offnen/Schließen des Wasserstoffventils (42) durch Verwenden eines Pulssignals ausgeführt wird.

7. Verfahren nach Anspruch 4, weiter den Schritt aufweisend: Abschalten des Brennstoffzellensystems, wenn die Ausgangsspannung des Brennstoffzellenstapels (1) unterhalb eines vorbestimmten Sicherheitsschwellengrenzwerts der Ausgangsspannung ist.

8. Verfahren nach Anspruch 4, weiter den Schritt aufweisend: Steuern der Luftpumpeinrichtung (32) in Übereinstimmung mit der Ausgangsspannung des Brennstoffstapels (1), wobei, wenn die Ausgangsspannung geringer als einer vorbestimmter Wert ist, die Luftpumpeinrichtung (32) veranlasst wird, den Luftfluss für eine bestimmte Zeitdauer mit einer maximalen Luftflussrate bereitzustellen und darauf zu einer regulären Flussrate zurückkehrt, wobei gleichzeitig das Wasserstoffabfuhrventil (44) für eine bestimmte Zeitdauer geöffnet und darauf geschlossen wird.

## Revendications

1. Dispositif (6) destiné au contrôle d'un système à piles à combustible comprenant un bloc de piles à combustible (1) auquel est alimenté de l'hydrogène et de l'oxygène contenant de l'air par l'intermédiaire d'une conduite d'alimentation en hydrogène et d'une conduite d'alimentation en air, le dispositif comprenant :
un microprocesseur (61) ;
un circuit de détection de tension (62) pour la détection d'une tension de sortie du bloc de piles à combustible (1) ;
un circuit de détection de courant (63) pour la détection d'un courant de sortie du bloc de piles à combustibles (1) ;
un circuit de détection de la pression de l'hydrogène (64) comprenant un dispositif de mesure de la pression (P1, P2) pour la détection de la pression de l'hydrogène à l'intérieur de la conduite d'alimentation en hydrogène ;
un circuit de détection de température (65) comprenant un dispositif de mesure de la température (T1, T2) pour la détection de la température associée au bloc de piles à combustible (1) ;
un circuit de contrôle de l'écoulement d'air (66) contrôlé par le microprocesseur (61) comprenant un circuit de modulation de la largeur d'impulsions pour la génération d'un signal de modulation d'impulsions en largeur (S1) pour le contrôle d'un dispositif de pompage de l'air (32) ;
un circuit de génération d'impulsions (67) contrôlé par le microprocesseur (61) pour la génération et l'application d'un signal impulsionnel (S2) à une valve d'hydrogène (42) montée sur la conduite l'alimentation en hydrogène ;
une unité de stockage (71) couplée au microprocesseur (61) pour le stockage des valeurs de référence des paramètres d'exploitation du système à piles à combustible ; et
un élément de réglage (72) couplé au microprocesseur (61) pour établir sélectivement un processus de contrôle et les paramètres de référence
dans lequel le dispositif de mesure de la pression du circuit de détection de la pression d'hydrogène (64) comprend :
un premier manomètre (P1) monté sur un côté de haute pression de la conduite d'alimentation en hydrogène pour la détection d'une pression en amont de l'hydrogène qui est déchargé d'un dispositif d'alimentation en combustible (4) ; et
un deuxième manomètre (P2) monté sur un côté de basse pression de la conduite d'alimentation en hydrogène pour la détection d'une pression latérale en aval de l'hydrogène qui est guidé dans le bloc de piles à combustible (1)

2. Dispositif (6) selon la Revendication 1, dans lequel la tension de sortie du bloc de piles à combustible (1) est sous forme analogique et dans lequel le circuit de détection de la tension (62) comprend un convertisseur analogique-numérique pour la conversion du signal analogique en le premier signal de détection (S5) sous forme numérique qui est appliqué au microprocesseur (61).

3. Dispositif (6) selon la Revendication 1, dans lequel le courant de sortie du bloc de piles à combustible (1) est sous forme analogique et dans lequel le circuit de détection du courant (63) comprend un convertisseur analogique-numérique pour la conversion du signal analogique en le second signal de détection (S6) sous forme numérique qui est appliqué au microprocesseur (61).

4. Procédé pour le contrôle d'un système à pile à combustible comprenant :
- un bloc de piles à combustible (1),
- un dispositif de pompage d'air (32) et un dispositif d'alimentation en hydrogène (4), tous deux couplés au bloc de piles à combustible (1) pour alimenter l'air et l'hydrogène respectivement à ceux-ci, l'hydrogène étant alimenté au bloc de piles à combustible (1) par l'intermédiaire d'une conduite d'alimentation en hydrogène possédant un côté haute pression couplé au dispositif d'alimentation en hydrogène (4) et un côté basse pression couplé au bloc de piles à combustible (1), et
- une soupape d'échappement de l'hydrogène (44) couplée au bloc de piles à combustible (1) pour le délestage de l'hydrogène de celui-ci ;
le procédé comprenant les étapes de :
(1) ouverture de la valve d'hydrogène (42) pour alimenter l'hydrogène depuis le dispositif d'alimentation en combustible (4) au bloc de piles à combustible (1) ;
(2) mise en route du dispositif de pompage d'air (32) pour alimenter de l'air au bloc de piles à combustible (1) à un débit d'écoulement maximum pendant une période de temps prédéterminée, en éliminant ce faisant l'eau résiduelle se trouvant à l'intérieur du bloc de piles à combustible (1) ;
(3) diminution de l'écoulement d'air à un débit d'écoulement d'air minimal et ouverture simultanée de la soupape d'échappement de l'hydrogène (44) pendant une période de temps donnée pour expulser les gaz impurs hors du bloc de piles à combustible (1) ;
(4) détection et surveillance des pressions d'hydrogène (P1, P2) à la fois aux côtés haute et basse pression de la conduite d'alimentation en hydrogène, lors desquelles la valve d'hydrogène (42) est ouverte pendant une période de temps donnée chaque fois que la pression d'hydrogène du côté basse pression (P2) descend en-dessous d'un niveau prédéterminé ;
(5) détection du courant de sortie (I) du bloc de piles à combustible (1), dans lequel le débit d'écoulement de l'air du dispositif de pompage de l'air (32) est réglé
- sur une valeur minimale lorsque le courant de sortie (I) est inférieur à une limite plus basse qu'une limite inférieure préréglée (Imin), - pour être trois fois le débit d'écoulement requis en fonction du courant de sortie (I) de manière à alimenter suffisamment d'oxygène au bloc de piles à combustible (1) lorsque le courant de sortie (I) est supérieur à la limite inférieure préréglée (Imin) et inférieur à une limite supérieure préréglée (Imax),
et
- sur un débit d'écoulement maximum qui peut être prélevé par le dispositif de pompage d'air (32) lorsque le courant de sortie (1) est supérieur à la limite supérieure (Imax).

5. Procédé selon la Revendication 4, comprenant en outre une étape de :
contrôle de la température du bloc de piles à combustible (1) au sein d'une plage prédéfinie.

6. Procédé selon la Revendication 4, dans lequel l'ouverture/fermeture sélective de la valve d'hydrogène (42) est réalisée en utilisant un signal impulsionnel.

7. Procédé selon la Revendication 4, comprenant en outre l'étape de :
fermeture du système à piles à combustible lorsque la tension de sortie du bloc de piles à combustible (1) est inférieure à un niveau de seuil de sécurité présélectionné de la tension de sortie.

8. Procédé selon la Revendication 4, comprenant en outre l'étape de :
contrôle du dispositif de pompage d'air (32) en fonction de la tension de sortie du bloc de piles à combustible (1) tandis que lorsque la tension de sortie est inférieure à une valeur prédéterminée, le dispositif de pompage d'air (32) est forcé à fournir un écoulement d'air avec un débit d'écoulement d'air maximum pendant une période de temps donnée et revient ensuite à un débit d'écoulement régulier, la soupape d'échappement de l'hydrogène (44) étant simultanément ouverte pendant une période de temps donnée et ensuite fermée.
